# EUROPEAN PATENT SPECIFICATION

(11) **EP 3 167 990 B1**
(45) Date of publication and mention of the grant of the patent: **22.09.2021**
(21) Application number: 15194099.6
(22) Date of filing: 11.11.2015
(51) Int. Cl.: B23C 5/06, B23C 5/22

(54) **MILLING TOOL**
FRÄSWERKZEUG
OUTIL DE FRAISAGE

(43) Date of publication of application: 17.05.2017
(73) Proprietor: Sandvik Intellectual Property AB, 811 81 Sandviken (SE)
(72) Inventor: Seliö, John, SE-811 32 Sandviken (SE)
(74) Representative: Sandvik

(56) References cited:
- EP-A1- 2 620 243
- EP-A2- 2 198 997
- WO-A1-2015/117733
- US-A1- 2009 290 945
- US-A1- 2010 034 602
- US-A1- 2014 314 509

## Description

### FIELD OF THE INVENTION

The present invention relates to a milling tool for shoulder milling according to the preamble of claim 1.

A radially mounted cutting insert is to be understood as a cutting insert which is mounted with an upper side including a rake surface forming a major surface of the cutting insert, around which an upper cutting edge is provided, so that the major surface of the cutting insert is facing in a direction of rotation of the tool. In other words, the radially mounted cutting insert has a thickness as measured between the upper and lower side of the insert, which is substantially smaller than a width, height, or diameter of an inscribed circle (IC) of said major surface. Accordingly, the cutting insert has an opposite lower major surface including a bottom support surface, which is mounted on a bottom contact surface in an insert seat of the milling tool. The radially mounted insert is to be distinguished from a tangentially mounted insert, which is mounted on a tangentially extending insert seat surface of the milling tool. The tangentially mounted cutting insert has a substantially greater thickness as measured in the rotational direction of the milling tool.

### BACKGROUND AND PRIOR ART

Milling tools are used for chip removing machining of workpieces of a variety of different materials, such as metal and composite materials, in a wide range of applications. For cost-efficiency, it is preferable to use a milling tool which comprises on one hand a tool body, and on the other hand detachable and replaceable cutting inserts mounted therein. Typically, the tool body is manufactured from steel or another metal material, while as the cutting inserts are made of cemented carbide, ceramics, or another hard material. Since the cutting inserts are subjected to significant wear upon use in the tool, it is desirable for the insert to have as many edges as possible in order to prolong the service life of the cutting insert. Cutting inserts are therefore often made double-sided with cutting edges formed along both an upper side and a lower side of the insert, thus doubling the number of cutting edges per insert compared to single-sided cutting inserts. Double-sided cutting inserts can have a plurality of different shapes, such as circular, octagonal, hexagonal, triangular, trigonal, heptagonal, square, etc., referring to the basic shape of an upper side of the cutting insert.

When the double-sided cutting insert is mounted in the tool body, one of the cutting edges, located on the upper side of the cutting insert, is active in the machining process. The remaining cutting edges are inactive. Depending on the configuration of the tool, some of those cutting edges are "hidden" in the tool body, as the cutting insert is mounted in an insert seat of the tool body. A clearance is provided between the tool body and the inactive cutting edges. Contact between the inactive cutting edges and the tool body during mounting is thereby avoided.

US20140314509 discloses a milling tool comprising a tool body and a number of trigon-shaped cutting inserts that are detachably mounted, double-sided, and indexable. The tool body is rotatable around a central rotation axis and includes a front end and a rear end between which an envelope surface extends. Several insert seats are formed in a transition between the front end and the envelope surface. Each insert seat comprises a bottom contact surface, and an outer border delimits the insert seat from the front end and the envelope surface of the tool body. Each cutting insert has an upper side and a lower side connected by a side surface extending around a periphery of the cutting insert. The upper side comprises three indexable cutting edges formed in a transition between the side surface and the upper side. An identical lower side is formed with three indexable cutting edges in a transition between the side surface and the lower side.

Each double-sided cutting insert is securely and detachably radially mounted in an insert seat of the tool body. The lower side abuts the bottom contact surface, and the upper cutting edge comprises an active chip-removing cutting edge, in part extending essentially in parallel and in part extending essentially perpendicularly to the central rotation axis. In other words, the milling tool is configured for shoulder milling. Part of the lower cutting edge is hidden within the tool body as described above. To prevent the remaining part of the lower inactive cutting edge from contact with the tool body, the lower side of the cutting insert protrudes from the front end and the envelope surface of the tool body, so that an overhang is created by the cutting insert outside of the outer border of the insert seat.

A conventional milling tool for shoulder milling is shown in WO 2015/117733 A1.

### SUMMARY OF THE INVENTION

It has been recognised that the above mentioned type of tool is sometimes associated with damages caused on the radially mounted cutting insert as well as on the workpiece by chips removed from the workpiece. This problem may arise due to clamping of chips between the side surface of the cutting insert and the workpiece, which leads to damage of the active upper cutting edge, the surface of the workpiece, and/or the inactive lower cutting edge. In particular, this problem has been found to arise during shoulder milling.

It is a primary objective of the present invention to provide a solution to the above mentioned problem and to provide a milling tool having an improved tool life and/or a reduced risk of damaging the machined surface of the workpiece. In particular, it is an objective to provide such a milling tool with a reduced risk of damage being inflicted on a part of the lower inactive cutting edge neighbouring a peripheral surface of the tool body, the upper active cutting edge and/or the surface of the workpiece during milling.

At least the primary objective is achieved by means of the milling tool initially defined, characterised in that said milling tool is configured so that at least a part of the lower cutting edge neighbouring said outer border, said part being located behind the active chip-removing cutting edge in the direction of rotation, does not protrude by more than 0.5 mm with respect to the outer border, and so that a distance between said part of the lower cutting edge and said outer border is smaller than 0.5 mm in the direction of rotation of the tool body.

In the milling tool according to the present invention, at least a part of the inactive lower cutting edge neighbouring the outer border of the insert seat is protected during milling, because the part of the inactive lower cutting edge does not protrude, or only protrudes by a limited distance, with respect to the tool body. The minimal protrusion prevents chips that bend around the side surface of the cutting insert from clinging to the lower side of the cutting insert, potentially causing harm to the workpiece and/or the cutting insert. The small gap provided behind the protected part of the inactive lower cutting edge serves the same purpose and is chosen to reduce the tendency for chips to get stuck between the cutting insert and the tool body and thereby remain clamped between the cutting insert and the workpiece during continued machining. The milling tool according to the invention hereby enables a safe machining process, since cutting insert breakdowns due to chips clinging onto the cutting insert are avoided. Furthermore, the reduced amount of damages on the cutting edges improves the tool life and the machining economy of the cutting insert.

The milling tool according to the present invention is furthermore versatile and allows use of the same cutting insert for a plurality of different applications and for a relatively wide range of cutting data intervals without running into problems with damaged cutting edges related to chip formation. The end user of the milling tool can consequently reduce the stock holding capacity and the number of different types of cutting geometries used.

For cutting inserts provided with a lower primary chip-removing cutting edge portion, that part is important to protect. For many cutting insert geometries, this primary cutting edge portion is located directly behind an active upper primary cutting edge portion in the direction of rotation, and reversed with respect to the latter, and is thereby also most exposed to chips formed during machining. Chips have also been found to be more prone to get stuck between the cutting insert and the envelope surface than between the cutting insert and the front end of the tool body. However, depending on the cutting insert geometry, the lower cutting edge portion neighbouring the envelope surface of the tool body can be either a primary cutting edge portion or a secondary cutting edge portion. Both of those cutting edge portions are important to protect.

According to one embodiment of the invention, said part of the lower cutting edge does not protrude by more than 0.4 mm, preferably not more than 0.3 mm or 0.2 mm, with respect to the outer border of the insert seat. By minimising the amount that the inactive lower cutting edge is allowed to protrude, the problem with chips clinging to the lower side of the cutting insert is minimised. Alternatively, the outer border of the insert seat may protrude by the corresponding amount, yet if one of the part of the lower cutting edge and the outer border is designed to protrude, it's preferable that the cutting insert part protrudes somewhat in order to ensure that the basic body will not collide with the workpiece during milling as mentioned below.

According to one embodiment of the invention, said part of the lower cutting edge protrudes outside of said outer border. In this way, the cutting edge is protected thanks to the minimum protrusion, and at the same time, the tool body is prevented from contacting accidentally the surface of the workpiece during machining.

According to one embodiment of the invention, said outer border protrudes outside of said part of the lower cutting edge. Thus, said part of lower cutting edge is well protected inside of the tool body, eliminating problems with chips clinging to the lower side of the cutting insert.

According to one embodiment of the invention, said outer border protrudes outside of said part of the lower cutting edge by a maximum of 0.5 mm. In this way, it can be ensured that sufficient clearance between the tool body and the workpiece can be provided during milling.

According to one embodiment of the invention, said outer border protrudes outside of said part of the lower cutting edge by a maximum of 0.4 mm, preferably a maximum of 0.3 mm or 0.2 mm. A sufficient clearance between the workpiece and the tool body can thus easily be achieved.

According to one embodiment of the invention, the distance between said part of the lower cutting edge and said outer border is smaller than 0.4 mm in the direction of rotation, preferably smaller than 0.3 mm, and more preferably smaller than 0.25 mm. A small clearance may hereby be provided in order to secure a large enough clearance to prevent contact between the part of the lower cutting edge of the cutting inserts and the seat of the basic body during mounting, yet the clearance should preferably be made as small as possible to prevent chips from getting stuck, and also dirt, from entering between the cutting insert and the insert seat. This will protect the seat by preventing chips/dirt from damaging it and thereby improves the stability of the cutting insert within the insert seat even after several cutting insert replacements. When designing the milling tool, it should preferably be specified that the distance between the part of the lower cutting edge and the outer border, as measured in the direction of rotation, is at least 0.10 mm, 0.15 mm, or 0.20 mm, depending on the method of manufacturing. In this way, it is ensured that a small gap is achieved, taking manufacturing tolerances into account.

According to one embodiment of the invention, the at least one indexable cutting insert includes at least two, preferably at least three primary cutting edge portions arranged around each of the upper side and the lower side, respectively. More indexable cutting edges on double-sided cutting insert will improve the economy of the cutting tool, because the service life of the cutting insert can thereby be prolonged.

According to one embodiment of the invention, said part of the lower cutting edge includes at least a primary cutting edge portion. As already described, this cutting edge portion is for many cutting insert geometries most exposed to chips during milling. The condition of the primary cutting edge portion is also crucial for the milling process and for the final outcome of the machined surface. In this embodiment, the inactive primary cutting edge is well protected, regardless of whether it is neighbouring the envelope surface or the front end of the tool body.

According to one embodiment of the invention, said part of the lower cutting edge includes at least a secondary cutting edge portion. The secondary cutting edge portion may in particular be a surface generating cutting edge portion or a wiper cutting edge portion, but may also include a ramping cutting edge portion. In particular, for certain cutting insert geometries, such as trigonal cutting inserts, such a lower secondary cutting edge portion including a ramping cutting edge may be located behind the active primary cutting edge portion in the direction of rotation. This lower secondary cutting edge portion is in this embodiment protected from damages caused by chips formed during machining.

According to one embodiment of the invention, said part of the lower cutting edge includes at least a corner radius cutting edge portion. In this embodiment, a corner radius cutting edge neighbouring the outer border is protected from damages related to chip formation.

According to one embodiment of the invention, said part of the lower cutting edge includes at least all portions of the lower cutting edge which are neighbouring the envelope surface of the tool body. Protection during milling is thereby achieved for all cutting edge portions neighbouring the envelope surface of the tool body. As explained above, these cutting edge portions are usually most exposed to chips formed during milling and are therefore important to protect. In this embodiment, chips are prevented from getting stuck behind the active upper primary cutting edge portion in the direction of rotation of the tool body. Thereby, damages on the side walls generated in the workpiece during milling are prevented.

According to one embodiment of the invention, said part of the lower cutting edge includes all portions of the lower cutting edge which are neighbouring the outer border of the insert seat. The entire lower cutting edge is thereby protected, including both those portions of the lower cutting edge that neighbour the front side of the tool body and those portions of the lower cutting edge that neighbour the envelope surface.

According to one embodiment of the invention, each of the upper side and the lower side are at least partly recessed with respect to the upper and the lower cutting edges, respectively. In this way, a more positive inclination angle can be achieved, which improves the cutting properties of the milling tool, in particular with regard to chip flow.

According to the invention, the milling tool is configured for shoulder milling. The problem with chips clinging to the cutting insert is most likely to arise in shoulder milling, and with the milling tool according to this embodiment, such problems can be prevented.

Further advantageous features and advantages of the invention will appear from the following detailed description.

### BRIEF DESCRIPTION OF THE DRAWINGS

The invention will in the following be described by means of example with reference to the appended drawings, in which:
- Fig. 1: shows a perspective view of a milling tool according to the invention,
- Fig. 2: shows a top view of the tool in fig. 1,
- Fig. 3: shows a partial exploded view of the tool in fig. 1,
- Fig. 4: shows a partial perspective view of the tool in fig. 1,
- Fig. 5: shows a partial side view of the tool in fig. 1,
- Fig. 6: shows a cross section taken along the line VI-VI in fig. 5,
- Fig. 7: shows a partial side view of the tool in fig. 1,
- Fig. 8: shows a cross section taken along the line VIII-VIII in fig. 7, and
- Fig. 9: shows a partial front view of the tool in fig. 1.

### DETAILED DESCRIPTION OF EMBODIMENTS OF THE INVENTION

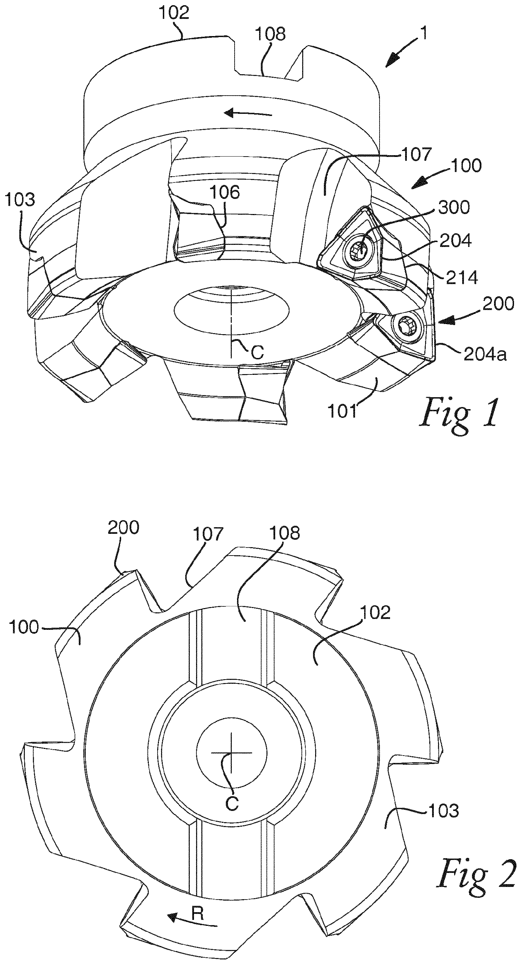

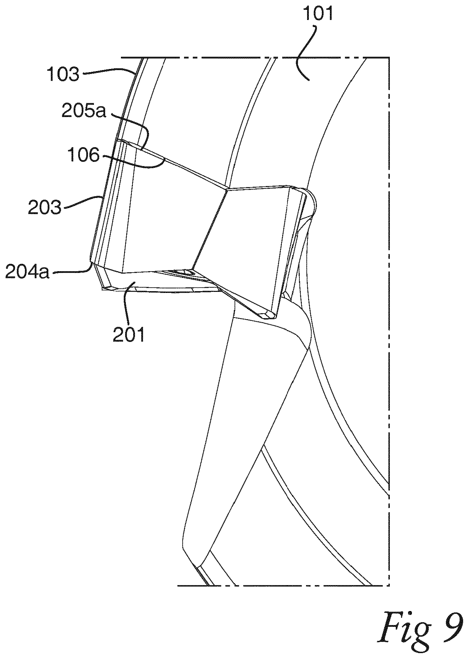

A milling tool 1 and details of this milling tool 1 according to an embodiment of the invention are shown in figs. 1-9. The milling tool 1 is configured for shoulder milling and comprises a tool body 100 and a plurality of cutting inserts 200 mounted in the tool body by means of screws 300. The tool body 100 has a central rotation axis C around which the tool body is rotatable in a direction of rotation R. Between a front end 101 and a rear end 102 of the tool body 100, an envelope surface 103 extends. Six insert seats 104 are in the shown embodiment formed in a transition between the front end 101 and the envelope surface 103. Each insert seat 104 comprises a bottom contact surface 105 and has an outer border 106 delimiting the insert seat 104 from the front end 101 and the envelope surface 103 of the tool body 100. In front of each insert seat 104 in the direction of rotation R, a chip pocket 107 is provided. In the rear end 102 of the tool body, a coupling interface in the form of an arbour coupling 108, configured to engage with a spindle of a machine via an adaptor (not shown), is provided.

In each insert seat 104, a trigonal shaped double-sided cutting insert 200 is mounted. Each cutting insert 200 has an upper side 201 and a lower side 202 connected by a side surface 203 extending around a periphery of the cutting insert 200. The cutting insert 200 is in the shown embodiment indexable with three index positions per side, i.e. a total of six index positions. Around the upper side 201, an upper cutting edge 204 including three cutting edges 204a, 204b, 204c is thus formed in a transition between the side surface 203 and the upper side 201. A lower cutting edge 214 comprising three cutting edges 214a, 214b, 214c is correspondingly formed in a transition between the side surface 103 and the lower side 102. Each of the upper side 201 and the lower side 202 are recessed with respect to the upper and the lower cutting edges 204, 214. The cutting insert 200 is radially mounted in the insert seat 104 with its lower side 202 abutting the bottom contact surface 105 of the insert seat 104. The upper cutting edge 204a in this case becomes an active chip-removing cutting edge, while the remaining cutting edges are inactive in a milling operation. The upper side thereby forms a rake surface.

Since the upper side 201 and the lower side 202 are identical, and since each of the cutting edges 204a, 204b, 204c, 214a, 214b, 214c are in turn identical, only the active chip-removing cutting edge 204a will be described in detail.

The active cutting edge 204a comprises four cutting edge portions 205a, 206a, 207a, 208a, including a primary cutting edge portion 205a configured to generate a side wall in the workpiece (not shown) during a milling operation, a corner radius cutting edge portion 206a, a first secondary cutting edge portion 207a in the form of a surface generating cutting edge portion or wiper cutting edge portion, and a second secondary cutting edge portion 208a, which is here mostly inactive in the milling operation, yet may become active as a ramping cutting edge portion.

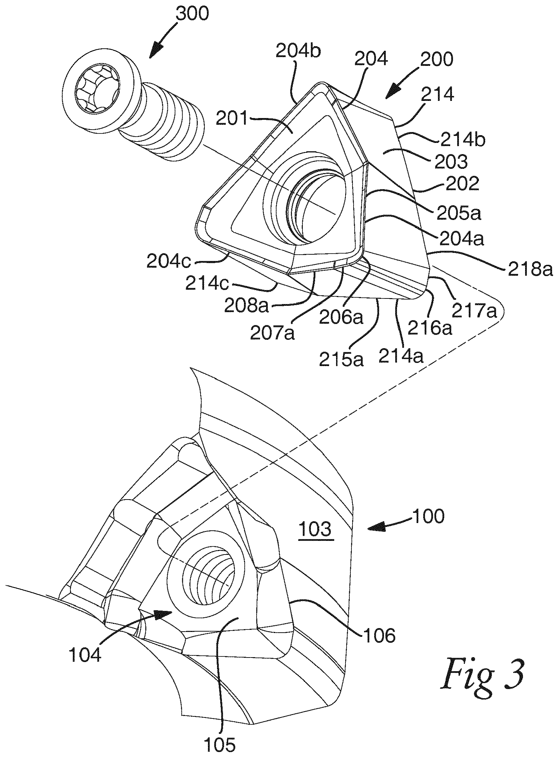

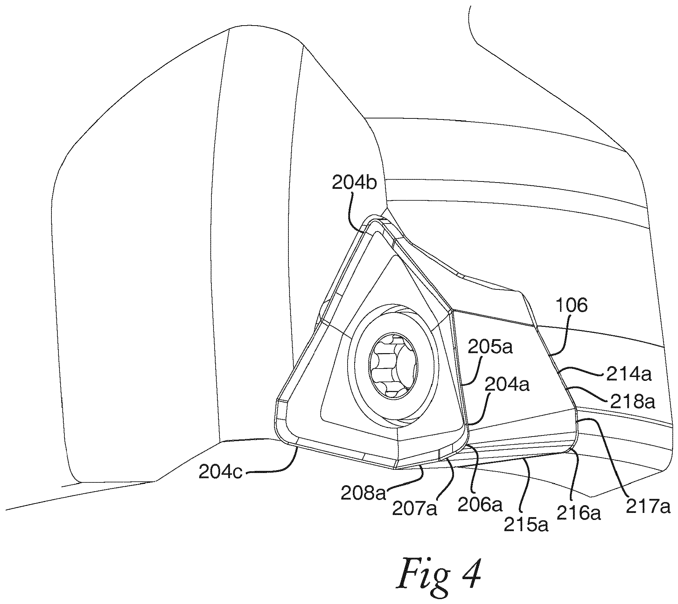

When the cutting insert 200 is mounted in the insert seat 104, a segment of the lower cutting edge 214, including most of the cutting edge 214b and the cutting edge 214c, is hidden within the tool body 100. A small clearance is provided around the hidden segment of the lower cutting edge 214, such that there is no contact between the hidden segment of the lower cutting edge 214 and the tool body 100. Another segment of the lower cutting edge 214 neighbours the outer border 106 of the insert seat 104. This segment of the lower cutting edge 214 is located behind the active chip-removing upper cutting edge 204a, and thus includes a lower primary cutting edge portion 215a, a lower corner radius cutting edge portion 216a, a lower first secondary cutting edge portion 217a, and a lower second secondary cutting edge portion 218a, of which all are inactive. As can be seen from fig. 3 and 4, the lower primary cutting edge portion 215a is located directly behind the upper second secondary cutting edge portion 208a in the direction of rotation, i.e. neighbouring the front side 101 of the tool body 100. The lower second secondary cutting edge portion 218a is located behind the active upper primary cutting edge portion 205a, neighbouring the envelope surface 103 of the tool body 100.

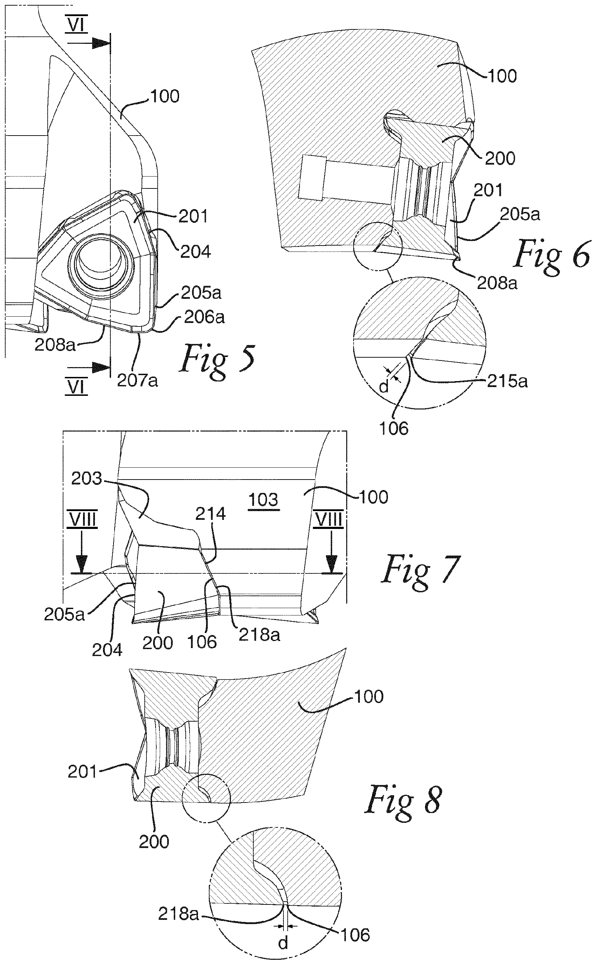

The segment of the lower cutting edge 214 that neighbours the outer border 106 of the insert seat 104 includes a part, in the shown embodiment equalling the entire segment neighbouring the outer border 106, which is located such that it does not protrude by more than 0.5 mm with respect to the outer border 106. In the shown embodiment, said part of the lower cutting edge 214 is approximately level with the outer border 106. In other words, none of the lower cutting edge 214 and the outer border 106 protrudes outside of the other one by a substantial amount. The transition between the tool body 100, both along the front side 101 and the envelope surface 103, and the side surface 203 of the cutting insert 200, is smooth. This can be seen in detail in fig. 5-9.

Moreover, a distance d provided between said part of the lower cutting edge 214 and the outer border 106 of the insert seat 104 is smaller than 0.5 mm in the direction of rotation R of the tool body 100 along the entire segment of the lower cutting edge 214 neighbouring the outer border 106. Fig. 6 shows the distance d between the inactive lower primary cutting edge portion 215a and the outer border 106, and fig. 8 shows the distance d between the inactive lower second secondary cutting edge portion 218a and the outer border 106. The distance d between said part of the lower cutting edge 214 and the outer border 106 is approximately constant along the lower cutting edge 214a. The distance d is chosen such that it is smaller than the thickness of a chip produced in a milling operation, so that such a chip cannot enter in between the cutting insert 200 and the tool body 100 and get stuck, thereby potentially causing harm to the workpiece and to the cutting insert 200 during continued milling. Since furthermore the part of the lower cutting edge 214 is level with the outer border 106, chips cannot destroy the segment of the inactive lower cutting edge 214a which is exposed, and the entire lower cutting edge 214 is thereby protected during milling.

The segment of the lower cutting edge neighbouring the outer border of the insert seat may include different numbers of cutting edge portions depending on the design of the cutting insert. For example, in a cutting insert having a large number of primary cutting edge portions, more than one inactive lower primary cutting edge portion may be included in that segment. The part of the lower cutting edge which is protected as discussed above may include all of those cutting edge portions or only some of them.

The invention is of course not limited to the embodiments disclosed, but may be varied and modified within the scope of the following claims. For example, the tool body may comprise several insert seats, of which not all of the insert seats need to be provided in a transition between the front end and the envelope surface. If the tool body is intended for a deep shoulder milling tool, also known as a long edge milling tool, it is possible to have insert seats provided around a periphery of the tool body, in an area between the front end and the rear end. Of course, the shape of the cutting inserts may be varied as well as the number of cutting inserts. For example, the cutting inserts may be circular, octagonal, hexagonal, triangular, trigonal, heptagonal, square, etc. Instead of screws, other fastening members can be used for mounting the cutting inserts in the tool body, such as e.g. clamping members.

## Claims

1. A milling tool (1) for shoulder milling comprising:
- a tool body (100) having a central rotation axis (C) around which the tool body is rotatable in a direction of rotation (R), including a front end (101) and a rear end (102) between which an envelope surface (103) extends, at least one insert seat (104) being formed in a transition between the front end (101) and the envelope surface (103), wherein said insert seat (104) comprises a bottom contact surface (105) and has an outer border (106) delimiting the insert seat (104) from the front end (101) and the envelope surface (103) of the tool body (100), and
- at least one indexable double-sided cutting insert (200) having an upper side (201) and a lower side (202) connected by a side surface (203) extending around a periphery of the cutting insert (200), an upper cutting edge (204) being formed in a transition between the side surface (203) and the upper side (201) and a lower cutting edge (214) being formed in a transition between the side surface (203) and the lower side (202),
wherein each cutting insert (200) is securely and detachably radially mounted in an insert seat (104) of the tool body (100) with the lower side (202) abutting the bottom contact surface (105), so that the upper cutting edge (204) comprises an active chip-removing upper cutting edge (204a),
***characterised in***
**that** said milling tool (1) is configured so that at least a part of the lower cutting edge (214) neighbouring said outer border (106), said part being located behind the active chip-removing upper cutting edge (204a) in the direction of rotation (R), does not protrude by more than 0.5 mm with respect to the outer border (106), and so that a distance (d) between said part of the lower cutting edge (214) and said outer border (106) is smaller than 0.5 mm in the direction of rotation (R) of the tool body (100).

2. The milling tool according to claim 1, wherein said part of the lower cutting edge (214) does not protrude by more than 0.4 mm, preferably not more than 0.3 mm or 0.2 mm, with respect to the outer border (106) of the insert seat (104).

3. The milling tool according to claim 1 or 2, wherein said part of the lower cutting edge (214) protrudes outside of said outer border (106).

4. The milling tool according to claim 1 or 2, wherein said outer border (106) protrudes outside of said part of the lower cutting edge (214).

5. The milling tool according to claim 4, wherein said outer border (106) protrudes outside of said part of the lower cutting edge (214) by a maximum of 0.5 mm.

6. The milling tool according to claim 5, wherein said outer border (106) protrudes outside of said part of the lower cutting edge (214) by a maximum of 0.4 mm, preferably by a maximum of 0.3 mm or 0.2 mm.

7. The milling tool according to any one of the preceding claims, wherein the distance (d) between said part of the lower cutting edge (214) and said outer border (106) is smaller than 0.4 mm in the direction of rotation (R), preferably smaller than 0.3 mm, and more preferably smaller than 0.25 mm.

8. The milling tool according to any one of the preceding claims, wherein the at least one indexable cutting insert (200) includes at least two, preferably at least three, primary cutting edge portions (215a) arranged around each of the upper side (201) and the lower side (202), respectively.

9. The milling tool according to claim 8, wherein said part of the lower cutting edge (214) includes at least a primary cutting edge portion (215a).

10. The milling tool according to claim 8 or 9, wherein said part of the lower cutting edge (214) includes at least a secondary cutting edge portion (217a, 218a).

11. The milling tool according to any one of claims 8-10, wherein said part of the lower cutting edge (214) includes at least a corner radius cutting edge portion (216a).

12. The milling tool according to any one of the preceding claims, wherein said part of the lower cutting edge (214) includes at least all portions (217a, 218a) of the lower cutting edge (214) which are neighbouring the envelope surface (103) of the tool body (100).

13. The milling tool according to claim 12, wherein said part of the lower cutting edge includes all portions (215a, 216a, 217a, 218a) of the lower cutting edge (214) which are neighbouring the outer border (106) of the insert seat (104).

14. The milling tool according to any one of the preceding claims, wherein each of the upper side (201) and the lower side (202) are at least partly recessed with respect to the upper and the lower cutting edges (204, 214), respectively.

## Patentansprüche

1. Fräswerkzeug (1) zum Fräsen von Schultern mit:
- einem Werkzeugkörper (100), der eine zentrale Rotationssachse (C) aufweist, um welche der Werkzeugkörper in einer Rotationsrichtung (R) rotierbar ist, mit einem vorderen Ende (101) und einem hinteren Ende (102), zwischen denen sich eine Mantelfläche (103) erstreckt, wenigstens einem Einsatzsitz (104), der in einem Übergang zwischen dem vorderen Ende (101) und der Mantelfläche (103) ausgebildet ist, wobei der Einsatzsitz (104) eine untere Kontaktfläche (105) aufweist und eine äußere Grenze (106) aufweist, die den Einsatzsitz (104) von dem vorderen Ende (101) und von der Mantelfläche (103) des Werkzeugkörpers (100) abgrenzt, und
- wenigstens einem wendbaren doppelseitigen Schneideinsatz (200) mit einer Oberseite (201) und einer Unterseite (202), die über eine Seitenfläche (203) verbunden sind, die sich über eine Peripherie des Schneideinsatzes (200) erstreckt, wobei eine obere Schneidkante (204) in einem Übergang zwischen der Seitenfläche (203) und der Oberseite (201) ausgebildet ist und eine untere Schneidkante (214) in einem Übergang zwischen der Seitenfläche (203) und der Unterseite (202) ausgebildet ist,
wobei jeder Schneideinsatz (200) sicher und lösbar radial in einem Einsatzsitz (104) des Werkzeugkörpers (100) montiert ist, wobei die Unterseite (202) an der unteren Kontaktfläche (105) anliegt, sodass die obere Schneidkante (204) eine aktive spanentfernende obere Schneidkante (204a) aufweist,
**dadurch gekennzeichnet, dass**
das Fräswerkzeug (1) so konfiguriert ist, dass wenigstens ein Teil der unteren Schneidkante (214), der mit der äußeren Grenze (106) benachbart ist, wobei dieser Teil in der Rotationsrichtung (R) hinter der aktiven spanentfernenden oberen Schneidkante (204a) angeordnet ist, bezogen auf die äußere Grenze (106) nicht mehr als 0,5 mm vorsteht, und so konfiguriert ist, dass ein Abstand (d) zwischen diesem Teil der unteren Schneidkante (214) und der äußeren Grenze (106) in der Rotationsrichtung (R) des Werkzeugkörpers (100) kleiner als 0,5 mm ist.

2. Fräswerkzeug nach Anspruch 1, wobei der Teil der unteren Schneidkante (214) bezogen auf die äußere Grenze (106) des Einsatzsitzes (104) nicht mehr als 0,4 mm vorsteht, vorzugsweise nicht mehr als 0,3 mm oder 0,2 mm.

3. Fräswerkzeug nach Anspruch 1 oder 2, wobei der Teil der unteren Schneidkante (214) außerhalb der äußeren Grenze (106) vorsteht.

4. Fräswerkzeug nach Anspruch 1 oder 2, wobei die äußere Grenze (106) außerhalb des Teils der unteren Schneidkante (214) vorsteht.

5. Fräswerkzeug nach Anspruch 4, wobei die äußere Grenze (106) außerhalb des Teils der unteren Schneidkante (214) maximal 0,5 mm vorsteht.

6. Fräswerkzeug nach Anspruch 5, wobei die äußere Grenze (106) außerhalb des Teils der unteren Schneidkante (214) maximal 0,4 mm vorsteht, vorzugsweise maximal 0,3 mm oder 0,2 mm.

7. Fräswerkzeug nach einem der vorangehenden Ansprüche, wobei der Abstand (d) zwischen dem Teil der unteren Schneidkante (214) und der äußeren Grenze (106) in der Rotationsrichtung (R) geringer als 0,4 mm ist, vorzugsweise geringer als 0,3 mm und besonders bevorzugt geringer als 0,25 mm.

8. Fräswerkzeug nach einem der vorangehenden Ansprüche, wobei der wenigstens eine wendbare Schneideinsatz (200) wenigstens zwei, vorzugsweise wenigstens drei primäre Schneidkantenabschnitte (215a) aufweist, die jeweils um die Oberseite (201) und die Unterseite (202) angeordnet sind.

9. Fräswerkzeug nach Anspruch 8, wobei der Teil der unteren Schneidkante (214) wenigstens einen primären Schneidkantenabschnitt (215a) aufweist.

10. Fräswerkzeug nach Anspruch 8 oder 9, wobei der Teil der unteren Schneidkante (214) wenigstens einen sekundären Schneidkantenabschnitt (217a, 218a) aufweist.

11. Fräswerkzeug nach einem der Ansprüche 8-10, wobei der Teil der unteren Schneidkante (214) wenigstens einen Schneidkantenabschnitt mit einem Eckenradius (216a) aufweist.

12. Fräswerkzeug nach einem der vorangehenden Ansprüche, wobei der Teil der unteren Schneidkante (214) wenigstens alle Abschnitte (217a, 218a) der unteren Schneidkante (214) aufweist, die mit der Mantelfläche (103) des Werkzeugkörpers (100) benachbart sind.

13. Fräswerkzeug nach Anspruch 12, wobei der Teil der unteren Schneidkante wenigstens alle Abschnitte (215a, 216a, 217a, 218a) der unteren Schneidkante (214) aufweist, die mit der äußeren Grenze (106) des Einsatzsitzes (104) benachbart sind.

14. Fräswerkzeug nach einem der vorangehenden Ansprüche, wobei die Oberseite (201) und die Unterseite (202) bezogen auf die oberen und die unteren Schneidkanten (204, 214) jeweils wenigstens teilweise zurückgesetzt sind.

## Revendications

1. Outil de fraisage (1) destiné au fraisage d'épaulement comprenant :
- un corps d'outil (100) présentant un axe de rotation central (C) autour duquel le corps d'outil peut être entraîné en rotation suivant un sens de rotation (R), incluant une extrémité avant (101) et une extrémité arrière (102) entre lesquelles une surface d'enveloppe (103) s'étend, au moins un siège de plaquette (104) étant ménagé dans une transition entre l'extrémité avant (101) et la surface d'enveloppe (103), où ledit siège de plaquette (104) comprend une surface de contact inférieure (105) et présente une bordure extérieure (106) délimitant le siège de plaquette (104) par rapport à l'extrémité avant (101) et à la surface d'enveloppe (103) du corps d'outil (100), et
- au moins une plaquette de coupe double face repositionnable (200) présentant un côté supérieur (201) et un côté inférieur (202) reliés par une surface latérale (203) s'étendant autour d'une périphérie de la plaquette de coupe (200), une arête de coupe supérieure (204) étant formée dans une transition entre la surface latérale (203) et le côté supérieur (201) et une arête de coupe inférieure (214) étant formée dans une transition entre la surface latérale (203) et le côté inférieur (202),
où chaque plaquette de coupe (200) est montée radialement et fermement fixée de manière détachable dans un siège de plaquette (104) du corps d'outil (100), le côté inférieur (202) venant buter contre la surface de contact inférieure (105), de sorte que l'arête de coupe supérieure (204) comprend une arête de coupe supérieure d'enlèvement de copeaux active (204a),
**caractérisé en ce**
**que** ledit outil de fraisage (1) est configuré de sorte qu'au moins une partie de l'arête de coupe inférieure (214) au voisinage de ladite bordure extérieure (106), ladite partie étant située derrière l'arête de coupe supérieure d'enlèvement de copeaux active (204a) suivant le sens de rotation (R), ne dépasse pas de plus de 0,5 mm par rapport à la bordure extérieure (106), et de sorte qu'une distance (d) entre ladite partie de l'arête de coupe inférieure (214) et ladite bordure extérieure (106) est inférieure à 0,5 mm suivant le sens de rotation (R) du corps d'outil (100).

2. Outil de fraisage selon la revendication 1, dans lequel ladite partie de l'arête de coupe inférieure (214) ne dépasse pas de plus de 0,4 mm, de préférence de plus de 0,3 mm ou de plus de 0,2 mm, par rapport à la bordure extérieure (106) du siège de plaquette (104).

3. Outil de fraisage selon la revendication 1 ou 2, dans lequel ladite partie de l'arête de coupe inférieure (214) dépasse à l'extérieur de ladite bordure extérieure (106).

4. Outil de fraisage selon la revendication 1 ou 2, dans lequel ladite bordure extérieure (106) dépasse à l'extérieur de ladite partie de l'arête de coupe inférieure (214).

5. Outil de fraisage selon la revendication 4, dans lequel ladite bordure extérieure (106) dépasse à l'extérieur de ladite partie de l'arête de coupe inférieure (214) de 0,5 mm au maximum.

6. Outil de fraisage selon la revendication 5, dans lequel ladite bordure extérieure (106) dépasse à l'extérieur de ladite partie de l'arête de coupe inférieure (214) de 0,4 mm au maximum, de préférence de 0,3 mm ou 0,2 mm au maximum.

7. Outil de fraisage selon l'une quelconque des revendications précédentes, dans lequel la distance (d) entre ladite partie de l'arête de coupe inférieure (214) et ladite bordure extérieure (106) est inférieure à 0,4 mm suivant le sens de rotation (R), de préférence inférieure à 0,3 mm, et de façon davantage préférée inférieure à 0,25 mm.

8. Outil de fraisage selon l'une quelconque des revendications précédentes, dans lequel la au moins une plaquette de coupe repositionnable (200) inclut au moins deux, de préférence au moins trois, portions d'arête de coupe principale (215a) agencées autour de chacun du côté supérieur (201) et du côté inférieur (202), respectivement.

9. Outil de fraisage selon la revendication 8, dans lequel ladite partie de l'arête de coupe inférieure (214) inclut au moins une portion d'arête de coupe principale (215a).

10. Outil de fraisage selon la revendication 8 ou 9, dans lequel ladite partie de l'arête de coupe inférieure (214) inclut au moins une portion d'arête de coupe secondaire (217a, 218a).

11. Outil de fraisage selon l'une quelconque des revendications 8 à 10, dans lequel ladite partie de l'arête de coupe inférieure (214) inclut au moins une portion d'arête de coupe de rayon de coin (216a).

12. Outil de fraisage selon l'une quelconque des revendications précédentes, dans lequel ladite partie de l'arête de coupe inférieure (214) inclut au moins toutes les portions (217a, 218a) de l'arête de coupe inférieure (214) qui se trouvent au voisinage de la surface d'enveloppe (103) du corps d'outil (100).

13. Outil de fraisage selon la revendication 12, dans lequel ladite partie de l'arête de coupe inférieure inclut toutes les portions (215a, 216a, 217a, 218a) de l'arête de coupe inférieure (214) qui se trouvent au voisinage de la bordure extérieure (106) du siège de plaquette (104).

14. Outil de fraisage selon l'une quelconque des revendications précédentes, dans lequel le côté supérieur (201) et le côté inférieur (202) sont chacun au moins en partie évidé par rapport aux arêtes de coupe supérieure et inférieure (204, 214), respectivement.
